# EUROPEAN PATENT APPLICATION

(11) **EP 4 578 727 A1**
(43) Date of publication of application: **02.07.2025**
(21) Application number: 24209451.4
(22) Date of filing: 29.10.2024
(51) Int. Cl.: B60N 2/14

(54) **ROTATABLE VEHICULAR SEAT**

(30) Priority: 27.12.2023 KR 20230193478
(71) Applicant: Hyundai Transys Inc., Chungcheongnam-do 31930 (KR)
(72) Inventor: KANG, Sin Jeong, 18463 Hwaseong-si, Gyeonggi-do (KR); PARK, Han Kyung, 18463 Hwaseong-si, Gyeonggi-do (KR); CHO, Jae Hoon, 18463 Hwaseong-si, Gyeonggi-do (KR); LEE, Won Yeong, 18463 Hwaseong-si, Gyeonggi-do (KR); KWAK, Hae Dong, 18463 Hwaseong-si, Gyeonggi-do (KR); KIM, Hyeon Jae, 18463 Hwaseong-si, Gyeonggi-do (KR)
(74) Representative: Viering, Jentschura & Partner mbB Patent- und Rechtsanwälte

(57) **Abstract**

A rotatable vehicular seat comprises a seat portion, a pair of locking pins disposed to face each other, each of the locking pins configured to extend in a longitudinal direction thereof, an inner plate coupled to the seat portion and configured to accommodate the pair of locking pins therein, an outer plate configured to rotatably accommodate the inner plate, the outer plate comprising a plurality of locking pin fixing grooves, and one end of each of the locking pins configured to be inserted into a corresponding one of the locking pin fixing grooves, and a locking pin bracket disposed on the inner plate. The locking pin bracket includes a first end and a second end respectively connected to the pair of locking pins.

## Description

### BACKGROUND

### (a) Technical Field

The present disclosure relates to a rotatable vehicular seat.

### (b) Background Art

Recently, research and develop has been actively conducted on autonomous driving of vehicles with development of data communication, processing, and sensor technology. With development of autonomous driving technology, a vehicle may be transformed from a simple means of transportation into one communal space capable of performing various functions.

For example, while autonomous driving is performed, a passenger may watch a movie in the vehicle. Further, artwork may be displayed in the vehicle, or a vehicle may function as a cafe in which passengers in the vehicle may freely talk to each other.

Particularly, in order to perform the above-described functions, it is required to develop a built-in seat configured to be freely movable in the vehicle, to provide various adjustable seating positions, and to be freely rotatable.

In general, a vehicle seat has a function of providing convenience to a passenger and stably supporting a passenger when the vehicle is travelling. Particularly, in the event of vehicle collision, a vehicle seat needs to be stably and firmly coupled to a vehicle body and a vehicle floor so as to ensure the safety of a passenger.

Therefore, in the case of a rotatable seat as well, rotation of the rotatable seat needs to be controlled by locking and unlocking functions provided in the seat. Further, in the locked state of the rotatable seat, it is necessary to secure sufficient coupling rigidity between the vehicle body and the rotatable seat.

The above information disclosed in this Background section is only for enhancement of understanding of the background of the disclosure, and therefore it may contain information that does not form the prior art that is already known in this country to a person of ordinary skill in the art.

### SUMMARY OF THE DISCLOSURE

The present disclosure has been made in an effort to solve the above-described problems associated with the prior art, and it is an object of the present disclosure to provide a rotatable vehicular seat configured to be rotatable in a vehicle.

In one example embodiment, the present disclosure provides a rotatable vehicular seat comprising a seat portion, a pair of locking pins disposed to face each other, each of the locking pins configured to extend in a longitudinal direction thereof, an inner plate coupled to the seat portion and configured to accommodate the pair of locking pins therein, an outer plate configured to rotatably accommodate the inner plate, the outer plate comprising a plurality of locking pin fixing grooves, and one end of each of the locking pins configured to be inserted into a corresponding one of the locking pin fixing grooves, and a locking pin bracket disposed on the inner plate, wherein the locking pin bracket includes a first end and a second end respectively connected to the pair of locking pins.

In another example embodiment, each of the locking pins includes a guide protrusion formed on one surface thereof and dimensioned to protrude outwards from the inner plate, and the locking pin bracket includes slot holes formed therein, each of the slot holes allowing a corresponding one of the guide protrusions of the locking pins to be movably accommodated therein.

In still another example embodiment, the locking pin bracket includes a lever rod provided thereon, and the lever rod is connected to the locking pin bracket and the inner plate and is configured to separate, based on release force applied to the lever rod, the one end of each of the locking pins from the corresponding one of the locking pin fixing grooves.

In yet another example embodiment, a shaft is provided at a rotation center of the inner plate, and the shaft connects the inner plate to the locking pin bracket and the lever rod.

In yet another example embodiment, when the lever rod is rotated by the release force, each of the guide protrusions of the locking pins is configured to be moved toward a center of the locking pin bracket along a corresponding one of the slot holes, thereby causing the one end of each of the locking pins to be separated from the corresponding one of the locking pin fixing grooves.

In yet another example embodiment, the inner plate and the seat portion are configured to enter a rotatable state when the one end of each of the locking pins is separated from the corresponding one of the locking pin fixing grooves by the release force applied to the lever rod.

In yet another example embodiment, the inner plate is configured to be fixed when the inner plate is rotated by rotation of the seat when any one of the locking pins accommodated in the inner plate is inserted into the corresponding one of the plurality of locking pin fixing grooves.

In yet another example embodiment, the inner plate and the locking pin bracket are connected to each other through a torsion spring.

In yet another example embodiment, a pair of the torsion springs is provided, each of the torsion springs include one end and the other end, and the other ends of each of the torsion springs are respectively connected to the first end and the second end of the locking pin bracket.

In yet another example embodiment, the outer plate includes guide portions provided on an inner side thereof and formed at locations adjacent to the locking pin fixing grooves, and each of the guide portions is formed on the outer plate at a depth that is different from a depth of a corresponding one of the locking pin fixing grooves, and each of the guide portions and the corresponding one of the locking pin fixing grooves are provided in a stepwise shape.

In yet another example embodiment, each of the locking pins has the other end opposite the one end, and wherein the inner plate is rotatable to a state in which the one end of each of the locking pins is separated from the corresponding one of the locking pin fixing grooves and in which the other end of each of the locking pins is configured to contact a corresponding one of the guide portions.

In yet another example embodiment, each of the locking pins has the other end opposite the one end, and wherein, by continuously rotating the inner plate while the other end of each of the locking pins contacts the corresponding one of the guide portions, each of the locking pins is configured to be moved by the corresponding one of the guide portions in a direction away from the corresponding one of the guide portions such that the one end of each of the locking pins is inserted into the corresponding one of the locking pin fixing grooves.

In yet another example embodiment, each of the locking pins includes the other end opposite the one end, the other end of each of the locking pins being formed to correspond in depth with a corresponding one of the guide portions, and by rotating the inner plate so that the one end of each of the locking pins is inserted into the corresponding one of the locking pin fixing grooves, the one end of each of the locking pins is configured to be located above the corresponding one of the guide portions.

In yet another example embodiment, the locking pin bracket and the inner plate are connected to each other through a torsion spring, one end of the torsion spring is connected to the inner plate, and the other end of the torsion spring is connected to the locking pin bracket.

In yet another example embodiment, a pair of the torsion springs is provided, and the respective force directions of the pair of torsion springs are opposite and parallel to each other, thereby rotating the locking pin bracket.

In yet another example embodiment, the inner plate includes locking pin accommodation grooves formed thereon and configured to allow the pair of locking pins to be movable within the respective locking pin accommodation grooves, and each of the locking pin accommodation grooves serves as a reciprocating motion path for a corresponding one of the locking pins.

In yet another example embodiment, the outer plate includes an inner plate accommodation space formed thereon and configured to accommodate the inner plate therein.

In yet another example embodiment, the locking pin fixing grooves are formed at equal intervals along a circumference of the outer plate. Other aspects and example embodiments of the disclosure are discussed infra.

It is understood that the terms "vehicle", "vehicular", and other similar terms as used herein are inclusive of motor vehicles in general, such as passenger automobiles including sport utility vehicles (SUV), buses, trucks, various commercial vehicles, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum). As referred to herein, a hybrid vehicle is a vehicle that has two or more sources of power, for example, vehicles powered by both gasoline and electricity.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is an exploded view of a rotatable vehicular seat according to an embodiment of the present disclosure;
FIG. 2 is a diagram showing a coupled state of the rotatable vehicular seat according to the embodiment of the present disclosure;
FIG. 3 is a diagram showing an example in which the rotatable vehicular seat is applied to a vehicle;
FIG. 4 is a diagram showing an inner plate and a locking pin accommodated in the inner plate;
FIGs. 5 and 6 are diagrams each showing a result of observing, from above, a state in which one end of the locking pin is separated from a locking pin fixing groove;
FIGs. 7 and 8 are diagrams each showing a result of observing, from above, a state in which one end of the locking pin is inserted into another locking pin fixing groove; and
FIGs. 9 to 14 are diagrams each showing a result of observing, from below, an operation sequence of the rotatable vehicular seat.

It should be understood that the appended drawings are not necessarily to scale, presenting a somewhat simplified representation of various example features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, the present disclosure will be described in detail through example embodiments thereof with reference to the accompanying drawings. Wherever possible, the same reference numbers will be used throughout the drawings to refer to the same or like parts, and redundant descriptions thereof will be omitted.

In describing the embodiments disclosed herein, when it is determined that a detailed description of publicly known techniques to which the disclosure pertains may obscure the gist of the present disclosure, the detailed description will be omitted. Further, it should be understood that the accompanying drawings are merely illustrated to easily describe the embodiments disclosed in this specification, and therefore, the technical idea disclosed in this specification is not limited by the accompanying drawings. Further, it should be noted that the accompanying drawings include all modifications, equivalents, and substitutes that fall within the spirit and technical scope of the present disclosure.

Meanwhile, in the present disclosure, terms such as "first" and/or "second" may be used to describe various components, but the components are not limited by the terms. The terms are used only for the purpose of distinguishing one component from other components.

In this specification, an expression in a singular form also includes the plural sense, unless clearly specified otherwise in context.

It should be understood that expressions such as "comprise" and "have" in this specification are intended to designate the presence of indicated features, numbers, steps, operations, components, parts, or combinations thereof, but do not exclude the presence or addition of one or more features, numbers, steps, operations, components, parts, or combinations thereof.

Hereinafter, the suffixes "module", "unit", and "part" for components used in the following description are merely provided for facilitation of preparing this specification. Therefore, the suffixes themselves do not have significant meanings or roles.

When one component is referred to as being "connected" or "joined" to another component, the one component may be directly connected or joined to the other component, but it should be understood that other components may be present therebetween. On the other hand, when the one component is referred to as being "directly connected to" or "directly in contact with" the other component, it should be understood that no other components are present therebetween.

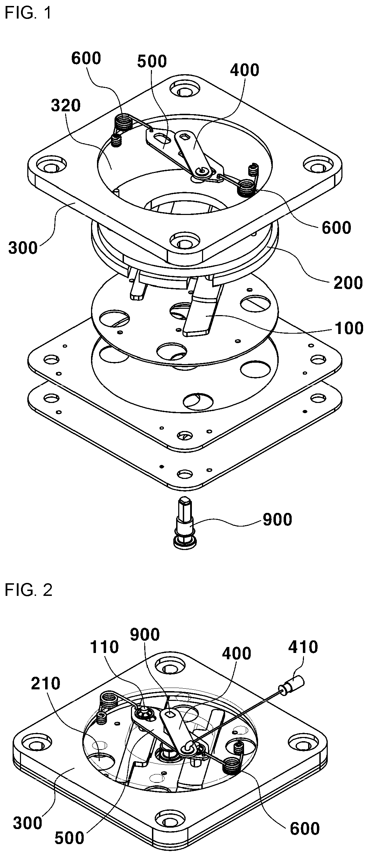

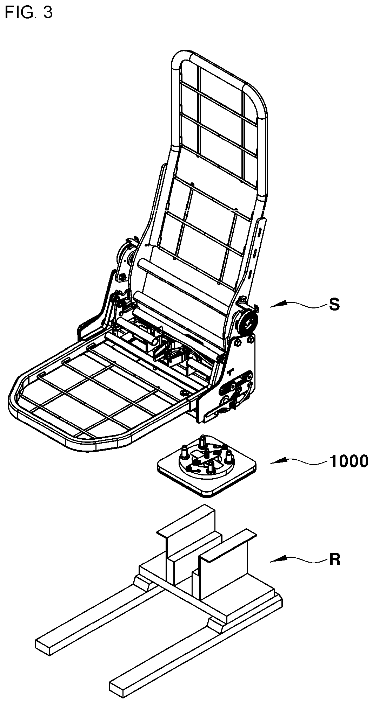

FIG. 1 is an exploded view of a rotatable vehicular seat according to an embodiment of the present disclosure, FIG. 2 is a diagram showing a coupled state of the rotatable vehicular seat according to the embodiment of the present disclosure, and FIG. 3 is a diagram showing an example in which the rotatable vehicular seat is applied to a vehicle.

Referring to FIGs. 1 to 3, the rotatable vehicular seat according to the embodiment of the present disclosure includes a pair of locking pins 100 disposed to face each other and formed to extend in the longitudinal direction, an inner plate 200 configured to allow a seat portion S to be coupled to the outer side thereof and to accommodate the locking pins 100 on the inner side thereof, and an outer plate 300 configured to rotatably accommodate the inner plate 200 on the inner side thereof, in which the outer plate 300 has a plurality of locking pin fixing grooves 310 and 310' respectively formed in a plurality of locations thereof and configured to fix the locking pins 100, one end of each of the locking pins 100 is inserted into a corresponding one of the locking pin fixing grooves 310 and 310', and the locking pins 100 are selectively inserted, by rotation of the inner plate 200, into a part of the plurality of locking pin fixing grooves 310 and 310'.

The seat of the present disclosure has a function of rotating in the interior space of the vehicle. The seat is rotatable when necessary so as to allow a passenger to sit in the desired direction. Simultaneously, the seat is prevented from rotating from the desired position of the passenger after rotation thereof. Since it is necessary to reliably secure the safety of a passenger against vehicle collision while a vehicle is constantly travelling, rotation of the seat needs to be prevented while a vehicle is travelling.

To this end, the present disclosure may provide a device capable of rotating the seat relative to a vehicle body floor or a rail provided on the vehicle body floor.

Specifically, a seat portion S may be coupled to the outer side of the inner plate 200. The inner plate 200 has a seat coupling hole 210 formed in the upper surface thereof and configured to allow the seat portion S to be coupled thereto. In this manner, when any one of the seat portion S and the inner plate 200 is rotated, the other component may also be rotated.

The inner plate 200 may be made of metal or plastic and may be formed by injection molding. Since the inner plate 200 is coupled to the vehicle seat, the inner plate 200 is preferably made of a material having sufficient rigidity.

Meanwhile, referring to FIG. 3, a rotatable seat 1000 including the inner plate 200 is coupled to a seat rail R provided on the vehicle floor or is directly coupled to the vehicle floor, thereby providing the rotatable seat 1000 in the vehicle.

As described above, the rotatable vehicular seat is mounted on the seat rail provided in the vehicle, thereby making it possible not only to enable free movement and free rotation of the seat, but also to provide a vehicular seat capable of assuming various positions in the vehicle.

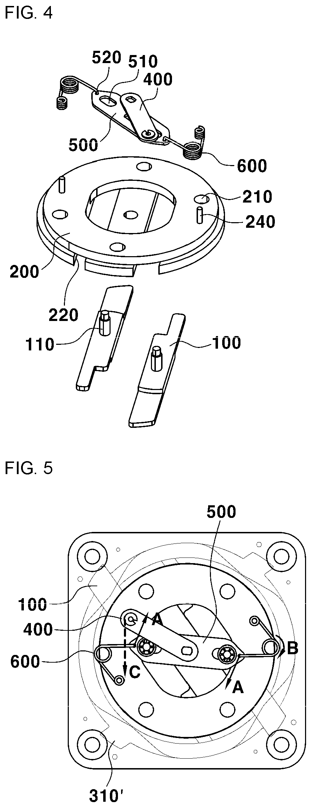

FIG. 4 is a diagram showing the inner plate and the locking pin accommodated in the inner plate. The locking pin 100 is accommodated in the inner plate 200. The locking pin 100 performs linear reciprocating motion in the inner plate 200. The inner plate 200 has a pair of locking pin accommodation grooves 220 formed thereon and configured to allow the pair of locking pins 100 to be accommodated on the inner side of the inner plate 200. The pair of locking pins 100 is accommodated in the pair of locking pin accommodation grooves 220 so as to enable linear reciprocating motion thereof therein. That is, the locking pin accommodation groove 220 serves as a reciprocating motion path of the locking pin 100.

Accordingly, when one end of the locking pin 100 is inserted into the locking pin fixing groove 310 of the outer plate 300, the inner plate 200 is fixed. When one end of the locking pin 100 is separated from the locking pin fixing groove 310, the inner plate 200 becomes rotatable.

The locking pin 100 serves to fix the inner plate 200 to the outer plate 300 so as to prevent rotation of the inner plate 200. Here, in a state in which the locking pin 100 is inserted into the locking pin fixing groove 310 of the outer plate 300, the locking pin 100 needs to be prevented from being separated from the locking pin fixing groove 310 due to external impact. Further, the locking pin may be made of metal or plastic so as to ensure sufficient rigidity, thereby preventing the locking pin 100 from being cut in a state in which the locking pin 100 is inserted into the locking pin fixing groove 310.

The inner plate 200 accommodates a pair of the locking pins 100 on the inner side thereof in a state in which the locking pins 100 are disposed to face each other. However, this structural configuration is only one embodiment, and in some cases, a single locking pin 100 may be provided, or one or more pairs of locking pins 100 may be provided.

When plural locking pins 100 are provided, the inner plate 200 may be more firmly fixed to the outer plate 300.

In this manner, one end of the locking pin 100 may be inserted into the locking pin fixing groove 310 formed in the outer plate 300, or one end of the locking pin 100 may be separated from the locking pin fixing groove 310.

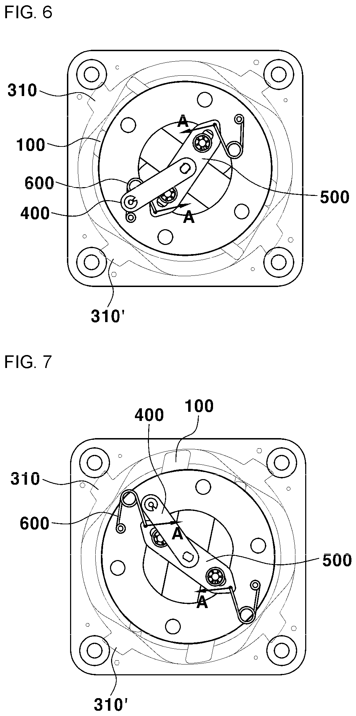

The outer plate 300 has an inner plate accommodating space 320 formed thereon and configured to accommodate the inner plate 200 therein, thereby accommodating the inner plate 200 in the outer plate 300. As shown in FIG. 5, when one end of the locking pin 100 accommodated in the inner plate 200 is inserted into the locking pin fixing groove 310 of the outer plate 300, rotation of the inner plate 200 becomes impossible. Meanwhile, as shown in FIG. 6, when one end of the locking pin 100 is separated from the locking pin fixing groove 310 of the outer plate 300, the inner plate 200 is rotatable within the outer plate 300 and, as such, the inner plate 200 accommodated in the outer plate is rotatable.

One end of the locking pin 100 accommodated in the inner plate 200 is repeatedly inserted into and separated from the outer plate 300. Further, the outer plate has the locking pin fixing groove 310 configured to allow one end of the locking pin 100 to be inserted thereinto and fixed thereto, and the inner plate 200 repeats rotation thereof in the outer plate 300. Accordingly, the outer plate preferably secures at least the same rigidity as that of the inner plate 200 or the locking pin 100. More preferably, the outer plate 300 secures stronger rigidity than that of the inner plate 200 or the locking pin 100.

As described above, a device adapted to rotate the seat may be manufactured in compact size by accommodating the locking pin 100 in the inner plate 200 and accommodating the inner plate 200 in the outer plate 300. In addition, since the device is made of a material capable of securing sufficient rigidity, it is possible to reduce risk of damage even if vehicle collision occurs on the outside of the vehicle.

Additionally, since the locking pin 100 is strongly fixed to the outer plate 300, it is possible to prevent a coupled component from being separated from the device due to vibration that occurs while a vehicle is travelling, or to prevent the vibration from being transmitted to the seat, thereby making it possible to provide comfortable driving.

As shown in FIGs. 5 to 8, the locking pin fixing grooves 310 and 310' may be formed at equal intervals along the circumference of the outer plate 300. When a user attempts to rotate the seat portion S coupled to the inner plate 200, one end of the locking pin 100 may be separated from the locking pin fixing groove 310 so that the seat portion S becomes rotatable. When the seat portion S is rotated, the inner plate 200 is rotated, and then the locking pin 100 is inserted into the locking pin fixing groove 310' which is different from the locking pin fixing groove 310 into which the locking pin 100 has been previously inserted. In this manner, rotation of the seat portion S may be completed while the inner plate 200 is fixed.

Particularly, the locking pin fixing grooves 310 are formed along the circumference of the outer plate 300, and a distance between the locking pin 100 fixing grooves each configured to allow the locking pin to be inserted thereinto is not sufficiently large in the counterclockwise and clockwise directions. Accordingly, even if impact is applied to the vehicle body from any direction, the inner plate 200 may be stably fixed to the outer plate 300.

Additionally, when plural locking pin fixing grooves are formed in the outer plate, the seat may be rotatable so as to achieve desired viewing angles. In the drawing, four locking pin fixing grooves are shown, and the seat is rotatable by 90 degrees. Meanwhile, four or more locking pin fixing grooves may be provided so as to rotate the seat by a smaller angle than 90 degrees.

Hereinabove, a brief description has been given as to the operation sequence of the vehicular seat according to the embodiment of the present disclosure. Hereinafter, a specific operation sequence will be described.

First, in order to put the seat portion S in the rotatable state, one end of the locking pin 100 is separated from the locking pin fixing groove 310.

FIGs. 5 and 6 are diagrams each showing a result of observing, from above, a state in which one end of the locking pin 100 is separated from the locking pin fixing groove 310. Referring to FIGs. 5 and 6, one end of the locking pin 100 may be separated from the locking pin fixing groove 310 by release force C applied to a lever rod 400 to be described later. Accordingly, the inner plate 200 enters the rotatable state.

Here, the release force C refers to external force applied to the lever rod 400 by a user or another device.

Specifically, referring to FIG. 4, the locking pin 100 has a guide protrusion 110 formed thereon and dimensioned to protrude outwards from the inner plate 200. Further, a locking pin bracket 500 has a slot hole 510 formed therein and configured to enable the guide protrusion 110 of the locking pin 100 to be movable therein. Here, the locking pin bracket 500 may be accommodated on the outer side of the inner plate 200.

The locking pin bracket 500 is a component configured to induce movement of the locking pin 100 through the slot hole 510 formed therein and rotation thereof and is a necessary component to separate the locking pin 100 inserted into the locking pin fixing groove 310 from the locking pin fixing groove 310. The locking pin bracket 500 may be disposed on the inner plate 200. The locking pin bracket 500 may have a first end and a second end respectively connected to the pair of locking pins 100. That is, the first end of the locking pin bracket 500 may be connected to one of the pair of locking pins 100, and the second end of the locking pin bracket 500 may be connected to the other one of the pair of locking pins 100.

The locking pin bracket 500 is coupled to the inner plate 200 by a shaft 900 to be described later.

The locking pin 100 is coupled to the locking pin bracket 500 so that the guide protrusion 110 is accommodated in the slot hole 510 formed in the locking pin bracket 500. Accordingly, when the locking pin bracket 500 is rotated, the guide protrusion 110 is moved in the slot hole 510, thereby enabling linear reciprocation of the locking pin 100.

The slot hole 510 is preferably formed to be wider than the width of the guide protrusion 110 so as to enable the guide protrusion 110 to be smoothly movable in the slot hole 510, and the guide protrusion 110 preferably has an appropriate height so as to be smoothly accommodated in the slot hole 510.

Meanwhile, referring to FIGs. 1 and 2, rotation of the locking pin bracket 500 is performed by the lever rod 400 connected to the locking pin bracket 500 and the inner plate 200. The lever rod 400 has a lever 410 formed at one end thereof and configured to allow release force to be applied thereto. That is, when the lever 410 is pulled, release force is applied to the lever rod 400 so as to rotate the lever rod 400.

The lever rod 400 is connected to the locking pin bracket 500, and the locking pin bracket 500 is also rotated by rotation of the lever rod 400. When the guide protrusion 110 accommodated in the locking pin bracket 500 is moved along the slot hole 510, linear motion of the locking pin 100 may be induced.

More specifically, a connection relationship between the locking pin bracket 500, the lever rod 400, and the inner plate 200 will be described.

Regarding the connection relationship between the lever rod 400 and the locking pin bracket 500, a shaft 900 is provided at the inner plate 200 and is configured to penetrate the inner plate 200, and the locking pin bracket 500 and lever rod 400 are coupled to the shaft 900. Accordingly, force applied to the lever rod 400 may also be transmitted to the locking pin bracket 500. A location of the shaft 900 may coincide with a location of the rotation center of each of the rotating inner plate 200 and the locking pin bracket 500.

Additionally, referring to FIGs. 2 and 4, the locking pin bracket 500 and the inner plate 200 are connected to each other through a torsion spring 600. The inner plate 200 has a spring coupling protrusion 240 formed on the upper surface thereof and coupled to the torsion spring 600. Here, one end of the torsion spring 600 is coupled to the spring coupling protrusion 240. In addition, the locking pin bracket 500 has a spring coupling hole 520 formed in the end thereof, and the other end of the torsion spring 600 is coupled to the spring coupling hole 520.

A pair of the torsion springs 600 is provided. Here, the pair of torsion springs 600 may be provided to be symmetrical relative to the locking pin bracket 500. Accordingly, force may be applied to the locking pin bracket 500 in the opposite directions of the locking pin bracket 500.

The torsion spring 600 applies force to the inner plate 200 or the locking pin bracket 500 depending on the relative positions of the inner plate 200 and locking pin bracket 500. That is, the locking pin bracket 500 and the inner plate 200 are rotatably provided, and the torsion spring 600 connecting the locking pin bracket 500 to the inner plate 200 also changes the position thereof depending on rotation of the locking pin bracket 500 and the inner plate 200 (refer to an arrow B shown in FIG. 5).

Therefore, when the position of the torsion spring 600 is changed, a direction of force acting on the inner plate 200 and the locking pin bracket 500 is also changed, and force acts on the locking pin 100 in the inner or outer direction of the inner plate 200. Accordingly, the locking pin 100 is capable of performing linear reciprocating motion within the inner plate 200.

FIGs. 5 to 8 are diagrams each showing a force direction A of the torsion spring.

Hereinafter, a specific direction of force applied to the locking pin 100 and the like will be described according to the operation sequence of the rotatable vehicular seat according to the present disclosure.

First, a description will be given as to a process in which one end of the locking pin 100 is separated from the locking pin fixing groove 310 according to the above-described connection relationship. Referring to FIGs. 5 and 6, FIG. 6 is a diagram showing a state in which the locking pin 100 receives force in the outward direction of the inner plate 200 such that one end of the locking pin 100 moves to the locking pin fixing groove 310 by force generated from the torsion spring 600. One end of the torsion spring 600 may be connected to the inner plate 200, and the other end of the torsion spring 600 may be connected to the locking pin bracket 500. A force direction A of the torsion spring 600 may be substantially similar to a direction extending from the one end of the torsion spring 600 to the other end thereof. In other words, the force direction A of the torsion spring 600 is oriented to move the other end of the torsion spring 600, connected to the locking pin bracket 500, farther from the end of the torsion spring 600, connected to the inner plate 200. Further, the respective force directions A of the pair of torsion springs 600 may be opposite and parallel to each other.

That is, the torsion spring 600 applies force in a clockwise direction, and the lever rod 400 and the locking pin bracket 500 connected thereto receive the force applied in the clockwise direction. Accordingly, the locking pin 100 receives force in the outward direction of the inner plate 200.

At this time, in order to rotate the seat portion S, when release force (exceeding force generated from the torsion spring) is applied to the lever rod 400 in the counterclockwise direction so as to rotate the lever rod 400 in the counterclockwise direction, the locking pin bracket 500 connected to the lever rod 400 is also rotated.

That is, since release force applied to the lever rod 400 is stronger than force generated from the torsion spring 600, one end of the locking pin 100 receives force in a direction away from the locking pin fixing groove 310, that is, in the inward direction of the inner plate 200.

As a result, as the guide protrusion 110 of the locking pin 100 is moved toward the rotation center of the locking pin bracket 500 along the slot hole 510, one end of the locking pin 100 is separated from the locking pin fixing groove 310, thereby entering the state shown in FIG. 6.

Additionally, referring to FIGs. 5 and 6, when one end of the locking pin 100 is completely separated from the locking pin fixing groove 310, the position of the torsion spring 600 is also rotatably changed by rotation of the locking pin bracket 500. When the position of the torsion spring 600 is rotatably changed, force applied from the torsion spring 600 to the locking pin bracket 500 and the inner plate 200 acts in the counterclockwise direction.

That is, as shown in FIG. 5, before the lever rod 400 is rotated, force of the torsion spring 600 acts in the clockwise direction, but when the lever rod 400 is rotated, force of the torsion spring 600 acts in the counterclockwise direction, as shown in FIG. 6, and the locking pin bracket 500 and the inner plate 200 connected thereto receive force in the counterclockwise direction. As a result, the locking pin 100 receives force urging the locking pin 100 to move to the inner side of the inner plate 200.

As described above, when one end of the locking pin 100 is separated from the locking pin fixing groove 310 by applying release force to the lever rod 400, the seat portion S coupled to the inner plate 200 may be in the rotatable state. In this state, when rotational force is applied to the seat portion S so as to rotate the seat portion S, the inner plate 200 connected to the seat portion S may be rotated.

Here, rotational force refers to external force applied to the seat by a user to rotate the seat.

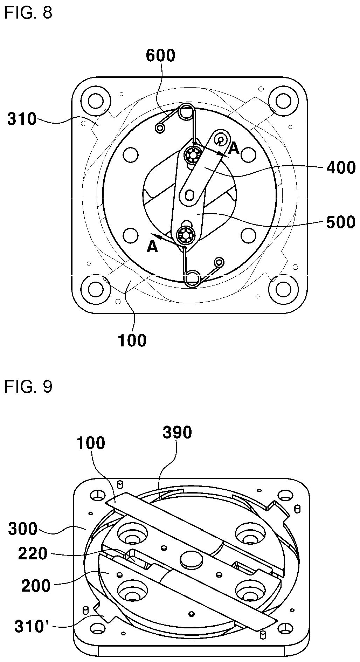

That is, the seat may be rotated by a passenger in the vehicle in the state shown in FIG. 6, and rotation of the seat may be completed by going through the states shown in FIGs. 7 and 8.

Next, the inner plate 200 is rotated by rotation of the seat portion S, and the locking pin 100 is inserted into another locking pin fixing groove 310', thereby completing rotation of the seat portion S. When the inner plate 200 is rotated by rotation of the seat portion S, the locking pin 100 accommodated in the inner plate 200 may be inserted into any one of the plurality of locking pin fixing grooves 310. When the locking pin 100 is inserted into any one of the plurality of locking pin fixing grooves 310, the inner plate 200 may be fixed in a non-rotatable state.

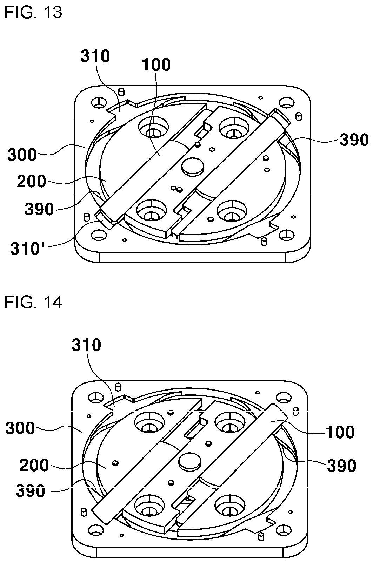

Referring to FIGs. 9 to 14, the outer plate 300 has guide portions 390 provided on the inner side thereof and respectively formed at locations respectively adjacent to the locking pin fixing grooves 310, and each of the guide portions 390 is formed on the outer plate at a depth that is different from a depth of a corresponding one of the locking pin fixing grooves 310 and 310'. Further, the other end of each of the locking pins 100 may be moved by contacting a corresponding one of the guide portions 390. The guide portion 390 and the locking pin fixing groove 310 may be provided in a stepwise shape. The guide portion 390 may be formed to protrude from the inner wall of the outer plate 300 toward the rotation center of the inner plate 200, and the locking pin fixing groove 310 may be a portion recessed in the inner wall of the outer plate 300 in a direction away from the rotation center of the inner plate 200. For example, the number of guide portions 390 may be the same as the number of locking pin fixing grooves 310.

One end and the other end of each of the locking pins 100 are respectively formed at different heights/depths on the outer plate 300. One end of the locking pin 100 is formed at a height/depth at which each of the locking pin fixing grooves 310 and 310' of the outer plate 300 is formed, and the other end of the locking pin 100 is formed at a height/depth at which the guide portion 390 of the outer plate 300 is formed. The locking pin 100 has the other end opposite one end, and the other end of the locking pin 100 may be formed to correspond in height/depth with the guide portion 390. When one end of the locking pin 100 is inserted into the locking pin fixing groove 310, the one end of the locking pin 100 may be located above the guide portion 390.

Meanwhile, in a state in which one end of the locking pin 100 is separated from the locking pin fixing groove 310, when the seat portion S is rotated clockwise or counterclockwise, the guide portion 390 formed on the outer plate 300 may push the other end of the locking pin 100 in a direction of force applied to the seat portion S and may apply force directed outwards from the inner plate 200 to the locking pin 100. The guide portion 390 may be formed to protrude from the inner wall of the outer plate 300 toward the rotation center of the inner plate 200. For example, a plurality of guide portions 390 may be provided on the inner wall of the outer plate 300, and the number of guide portions 390 may be the same as the number of locking pin fixing grooves 310. When the inner plate 200 is rotated to a state in which one end of the locking pin 100 is separated from the locking pin fixing groove 310, the other end of the locking pin 100 may contact the guide portion 390. When the inner plate 200 is continuously rotated to a state in which the other end of the locking pin 100 contacts the guide portion 390, the locking pin 100 may be moved by the guide portion 390 in a direction away from the guide portion 390, and one end of the locking pin 100 may be inserted into the locking pin fixing groove 310.

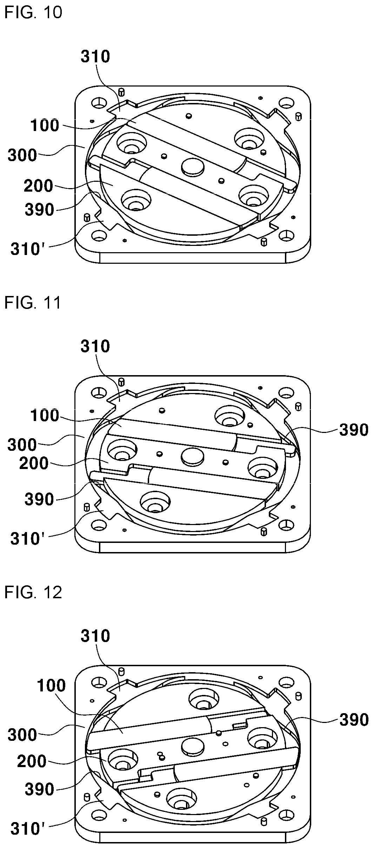

FIGs. 9 to 14 are diagrams each showing a result of observing, from below, the operation sequence of the rotatable vehicular seat. First, referring to FIGs. 9 and 10, the locking pin 100 is separated from the locking pin fixing groove 310 by release force applied to the lever rod 400. Thereafter, the seat portion S becomes rotatable.

Thereafter, when rotational force is applied to the seat portion S, rotational force is transmitted to the inner plate 200 connected to the seat portion S, and force is also transmitted to the locking pin 100 accommodated in the inner plate 200. Referring to FIGs. 10 to 12, a direction in which the locking pin 100 is moved is determined by force transmitted to the locking pin 100 by rotation of the seat portion S.

Then, the inner plate 200 is rotated by rotation of the seat portion S, and the other end of the locking pin 100 begins to contact the outer peripheral surface of the guide portion 390. Further, the other end of the locking pin 100 is continuously moved in a direction in which the locking pin 100 is moved by reaction force generated on the outer peripheral surface of the guide portion 390 until the other end of the locking pin 100 is separated from the outer peripheral surface of the guide portion 390.

Movement of the other end of the locking pin 100 continues until the other end of the locking pin 100 is separated from the outer peripheral surface of the guide portion 390 due to the shape of the outer peripheral surface of the guide portion 390.

Force directed outwards from the inner plate 200 is applied to the locking pin 100 due to reaction force from the guide portion 390. Particularly, the outer peripheral surface of the guide portion 390 is formed to have a shape adapted to push the other end of the locking pin 100, and reaction force is applied to the other end of locking pin 100 by the guide portion 390. As a result, force directed outwards from the inner plate 200 may be applied to the locking pin 100.

Thereafter, when the other end of locking pin 100 and the outer peripheral surface of the guide portion 390 are separated from each other in the state shown in FIG. 12, one end of the locking pin 100 is inserted into the locking pin fixing groove 310', which is different from the locking pin fixing groove 310 into which one end of the locking pin 100 has been previously inserted, by continuous rotational force of the inner plate 200 and force acting on the locking pin 100 in the outward direction of the inner plate 200 (refer to FIG. 7). Thereafter, the locking pin 100 is coupled to the outer plate 300, and rotation of the inner plate 200 is stopped, thereby completing rotation of the seat portion S.

As is apparent from the above description, the present disclosure provides a rotatable vehicular seat having advantages in that it is possible to rotate a vehicle seat, and a device capable of rotating the vehicle seat is simple and compact in size.

Particularly, a user may easily control a locked state of the rotatable vehicular seat and an unlocked state thereof, and coupling rigidity between the rotatable vehicular seat and a vehicle body may be stably maintained in the locked state, thereby making it possible to maximally secure the safety of a passenger in the event of vehicle collision.

The disclosure has been described in detail with reference to example embodiments thereof. However, it will be appreciated by those skilled in the art that changes may be made in these embodiments without departing from the principles and spirit of the disclosure, the scope of which is defined in the appended claims and equivalents thereto.

## Claims

1. A rotatable vehicular seat comprising:
a seat portion;
a pair of locking pins disposed to face each other;
an inner plate coupled to the seat portion and configured to accommodate the pair of locking pins therein;
an outer plate configured to rotatably accommodate the inner plate, the outer plate comprising a plurality of locking pin fixing grooves, and one end of each of the locking pins configured to be inserted into a corresponding one of the locking pin fixing grooves; and
a locking pin bracket disposed on the inner plate,
wherein the locking pin bracket includes a first end and a second end respectively connected to the pair of locking pins.

2. The rotatable vehicular seat of claim 1, wherein:
each of the locking pins includes a guide protrusion formed on one surface thereof and dimensioned to protrude outwards from the inner plate, and
the locking pin bracket includes slot holes formed therein, each of the slot holes allowing a corresponding one of the guide protrusions of the locking pins to be movably accommodated therein.

3. The rotatable vehicular seat of claim 1 or 2, wherein the locking pin bracket includes a lever rod provided thereon, and the lever rod is connected to the locking pin bracket and the inner plate and is configured to separate, based on release force applied to the lever rod, the one end of each of the locking pins from the corresponding one of the locking pin fixing grooves.

4. The rotatable vehicular seat of claim 3, wherein a shaft is provided at a rotation center of the inner plate, and the shaft connects the inner plate to the locking pin bracket and the lever rod.

5. The rotatable vehicular seat of one of claims 3-4 provided that in combination with claim 2, wherein, when the lever rod is rotated by the release force, each of the guide protrusions of the locking pins is configured to be moved toward a center of the locking pin bracket along a corresponding one of the slot holes, thereby causing the one end of each of the locking pins to be separated from the corresponding one of the locking pin fixing grooves.

6. The rotatable vehicular seat of one of claims 3-5, wherein the inner plate and the seat portion are configured to assume a rotatable state when the one end of each of the locking pins is separated from the corresponding one of the locking pin fixing grooves by the release force applied to the lever rod.

7. The rotatable vehicular seat of claim 6, wherein the inner plate is configured to be fixed when the inner plate is rotated by rotation of the seat portion when any one of the locking pins accommodated in the inner plate is inserted into the corresponding one of the plurality of locking pin fixing grooves.

8. The rotatable vehicular seat of one of claim 1-7, wherein the inner plate and the locking pin bracket are connected to each other through a torsion spring.

9. The rotatable vehicular seat of claim 8, wherein a pair of the torsion springs is provided, each of the torsion springs include one end and the other end, and the other ends of each of the torsion springs are respectively connected to the first end and the second end of the locking pin bracket.

10. The rotatable vehicular seat of one of claims 1-9, wherein the outer plate includes guide portions provided on an inner side thereof and formed at locations adjacent to the locking pin fixing grooves, and each of the guide portions is formed on the outer plate at a depth that is different from a depth of a corresponding one of the locking pin fixing grooves, and
wherein each of the guide portions and the corresponding one of the locking pin fixing grooves are provided in a stepwise shape.

11. The rotatable vehicular seat of claim 10, wherein each of the locking pins has the other end opposite the one end, and wherein the inner plate is rotatable to a state in which the one end of each of the locking pins is separated from the corresponding one of the locking pin fixing grooves and in which the other end of each of the locking pins is configured to contact a corresponding one of the guide portions.

12. The rotatable vehicular seat of claim 11, wherein each of the locking pins has the other end opposite the one end, and wherein, by continuously rotating the inner plate while the other end of each of the locking pins contacts the corresponding one of the guide portions, each of the locking pins is configured to be moved by the corresponding one of the guide portions in a direction away from the corresponding one of the guide portions such that the one end of each of the locking pins is inserted into the corresponding one of the locking pin fixing grooves.

13. The rotatable vehicular seat of one of claims 10-12, wherein:
each of the locking pins includes the other end opposite the one end, the other end of each of the locking pins being formed to correspond in depth with a corresponding one of the guide portions, and
by rotating the inner plate so that the one end of each of the locking pins is inserted into the corresponding one of the locking pin fixing grooves, the one end of each of the locking pins is configured to be located above the corresponding one of the guide portions.

14. The rotatable vehicular seat of one of claims 1-7 or of one of claims 10-13 provided that not in combination with claim 8 or 9, wherein:
the locking pin bracket and the inner plate are connected to each other through a torsion spring, one end of the torsion spring is connected to the inner plate, and the other end of the torsion spring is connected to the locking pin bracket.

15. The rotatable vehicular seat of claim 14, wherein:
a pair of the torsion springs is provided, and
the respective force directions of the pair of torsion springs are opposite and parallel to each other, thereby rotating the locking pin bracket.
